# EUROPEAN PATENT SPECIFICATION

(11) **EP 0 899 901 B1**
(45) Date of publication and mention of the grant of the patent: **08.12.2004**
(21) Application number: 98116257.1
(22) Date of filing: 28.08.1998
(51) Int. Cl.: H04B 15/02, H04B 1/40

(54) **Device and method for displaying an operating status in a radio communication system**
Verfahren und Vorrichtung zur Anzeige des Operationsstatus eines Funkkommunikationssystems
Procedé et dispositif d'affichage de l'état fonctionnel d'un système de communication

(30) Priority: 30.08.1997 KR 4377897
(43) Date of publication of application: 03.03.1999
(73) Proprietor: Samsung Electronics Co., Ltd., Suwon-city, Kyungki-do (KR)
(72) Inventor: Cho, Sung-Min, Kumi-shi, Kyongsangbuk-do (KR)
(74) Representative: Grünecker, Kinkeldey, Stockmair & Schwanhäusser Anwaltssozietät

(56) References cited:
- DE-A- 3 228 203
- US-A- 5 157 551
- PATENT ABSTRACTS OF JAPAN vol. 008, no. 247 (E-278), 13 November 1984 (1984-11-13) & JP 59 123308 A (MATSUSHITA DENKI SANGYO KK), 17 July 1984 (1984-07-17)

## Description

The invention relates to a radio communication system, and in particular, to a device and a method for displaying operation status of parts of a radio communication system.

A radio communication system includes a device consisting of a multiplicity of displaying elements to display the operating status thereof. In most cases, the display is composed of LEDs (Light Emitting Diodes) or seven-segment displays, which are turned on and off at specified intervals to display the normal/abnormal operating status of the radio communication system. In particular, the display of the radio communication system separately includes displaying elements for indicating the normal operating status and displaying elements for indicating the abnormal operating status. These displaying elements each indicate the normal operating status and the abnormal operating status by flickering at predetermined frequencies.

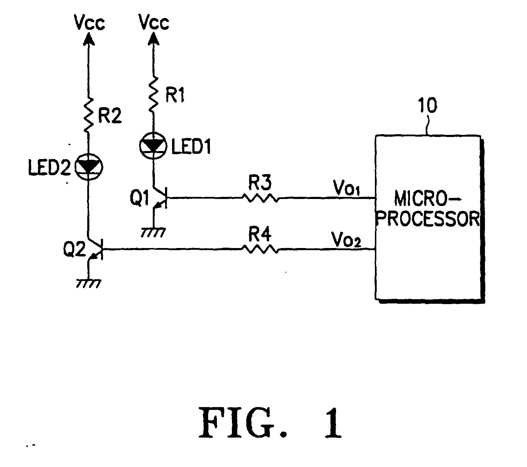

Fig. 1 shows a circuit diagram of a display control device for the radio communication system, wherein the display control device includes a microprocessor 10 and two displaying elements (i.e. LED1 and LED2). Here, for simplicity, it is assumed that the device includes only two LEDs which are both for indicating the normal operating status of the system.

For example, the first diode LED1 is for indicating the normal operating status of a certain part of the system and the second diode LED2 is for indicating the normal operating status of another part of the system. As depicted in Fig. 1, the first diode LED1 has its anode connected to a supply voltage Vcc via a resistor R1 and has its cathode connected to the collector of a first NPN transistor Q1 which acts as a switching element. The first transistor Q1 has its emitter grounded and its base connected to a first control voltage Vo1 output from the microprocessor 10 via a current limiting resistor R3. The second diode LED2 is connected accordingly with resistors R2 and R4, transistor Q2 and voltage Vo2 corresponding to R1, R3, Q1 and Vo1, respectively.

The microprocessor 10 controls the first and second transistors Q1 and Q2 according to the operating status of the system to turn on/off the first and second diodes LED1 and LED2.

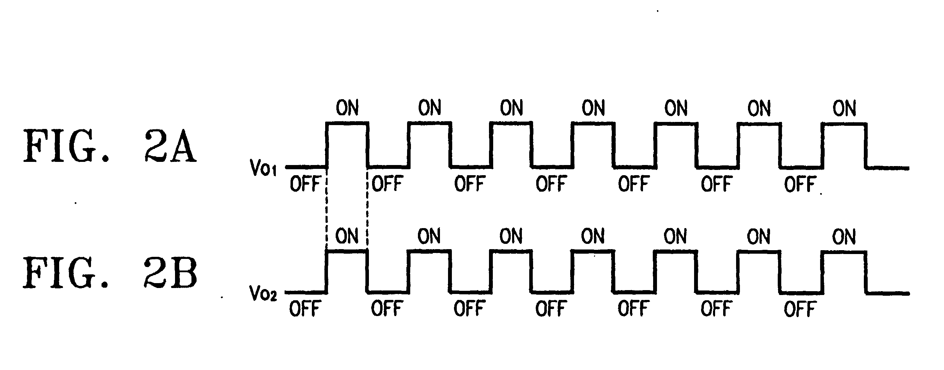

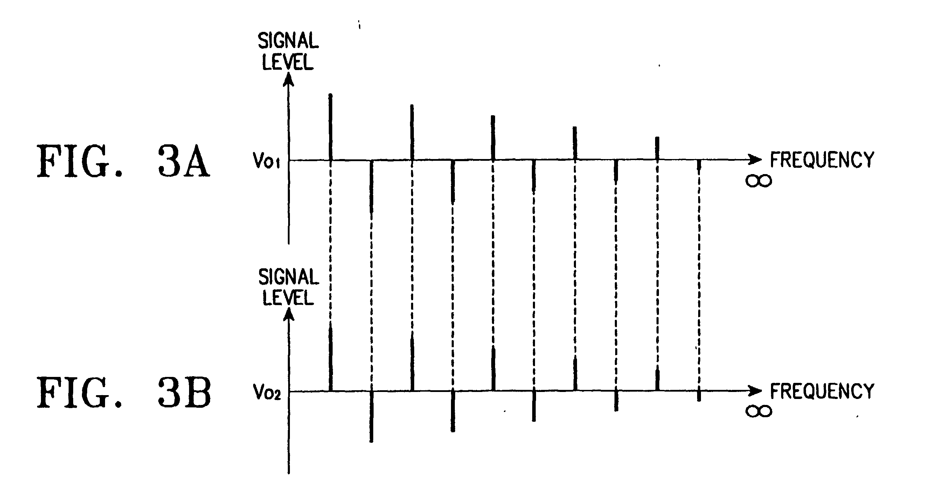

When a conventional system operates normally, the displaying elements LED1 and LED2 flicker according to the waveforms of Figs. 2A and 2B to notify the normal operating status to the user. More specifically, as shown in Figs. 2A and 2B, the microprocessor 10 outputs the first and second control voltages Vo1 and Vo2 in the rectangular waveform. Thus, when the respective system parts corresponding to the first and second diodes LED1 and LED2 operate normally, these diodes are simultaneously turned on/off having the same time periods. In this case the first and second diodes LED1 and LED2 generate noise frequencies as shown in Figs. 3A and 3B, respectively.

As shown, the noise frequencies generated from the first and second diodes LED1 and LED2 theoretically have infinite harmonics. Further, the frequencies generated by ON/OFF operations of the first and second diodes LED1 and LED2 have the same phase. As a result, the frequencies generated from both diodes interfere with each other thereby amplifying the noise signals of the respective frequency components.

In addition, even though the frequencies generated at the respective diodes have a slight phase difference, some harmonics of the same frequencies may exist and in such a case, these frequency components interfere with each other, thereby amplifying the respective noise signals.

Such noise signals may deteriorate the communication quality of the radio communication system in particular of a TDMA (Time Division Multiple Access) communication system such as the DECT (Digital European Cordless Telephone) system.

It is therefore the object of the invention to provide a device and a method for suppressing the noise generated by driving displaying elements in a radio communication system.

This object is solved by the subject matters of independent claims 1 and 8.

Preferred embodiments are defined by the dependent claims.

The invention will become more apparent from the following detailed description when taken in conjunction with the accompanying drawings in which:
Fig. 1 is a schematic diagram of a display control device for a radio communication system, having two LEDs;
Figs. 2A and 2B are diagrams showing waveforms of the control voltages for the LEDs of the Fig.1 according to the prior art;
Figs. 3A and 3B are diagrams showing the frequencies generated by driving the LEDs in response to the control voltages of Figs. 2A and 2B, respectively;
Figs. 4A and 4B are diagrams showing waveforms of the control voltages according to an embodiment of the invention;
Figs. 5A and 5B are diagrams showing the frequencies generated by driving the LEDs in response to the control voltages of Figs. 4A and 4B, respectively; and
Fig. 6 is a schematic diagram of a display control device for a radio communication system, having a plurality of LEDs.

A preferred embodiment of the invention will be described in detail hereinbelow with reference to the accompanying drawings.

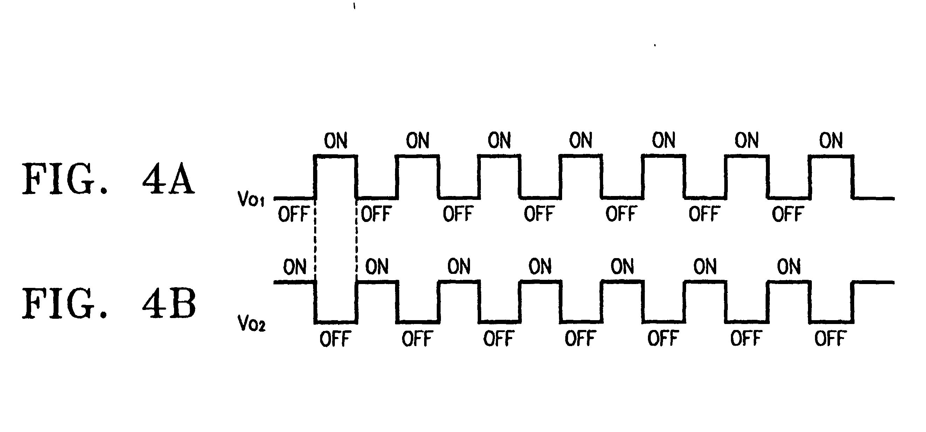

Referring to Figs. 4A and 4B, the microprocessor 10 of the device depicted in Fig. 1 generates a first control voltage Vo1 with a specified cycle to turn on/off the first diode LED1. When the first control voltage Vo1 is at the high level, the first transistor Q1 is turned on and the current from the supply voltage Vcc flows to the collector of the first transistor Q1 through the current limiting resistor R1 and the first diode LED1. Consequently, the first diode LED1 is turned on.

On the contrary, when the first control voltage Vo1 is at the low state, the first diode LED1 is turned off. The on/off state of the second diode D2 is equivalently dependent on voltage Vo2.

As shown in Figs. 4A and 4B, the waveform of the first control voltage Vo2 is shifted by 1/2 cycle from the waveform of the second control voltage Vo2, so that the first and second diodes LED1 and LED2 are turned on/off alternately. That is, the first and second control voltages Vo1 and Vo2 have 180° phase difference.

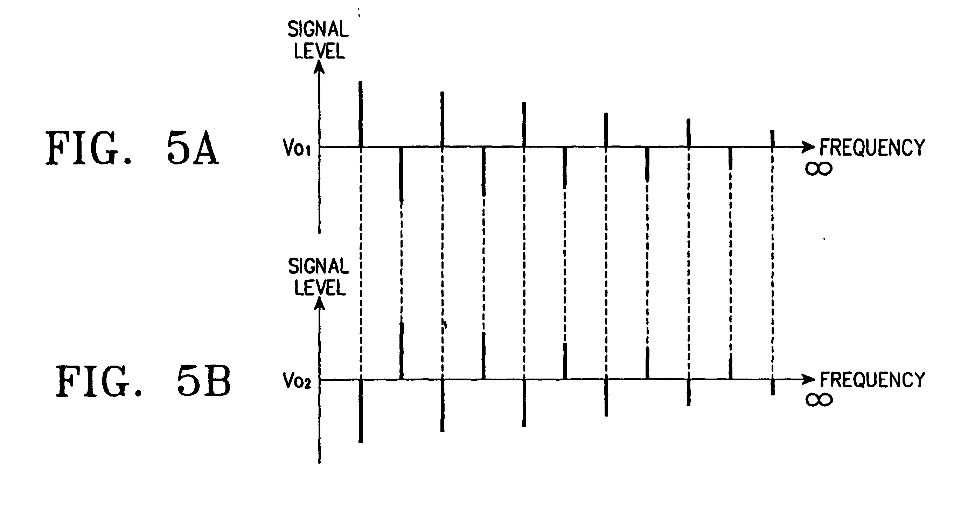

Figs. 5A and 5B show the frequencies generated from the first and second diodes LED1 and LED2 in response to the first and second control voltages Vo1 and Vo2, respectively. As shown, the frequencies generated from both diodes have opposite phases, so that the noise frequencies may cancel each other out.

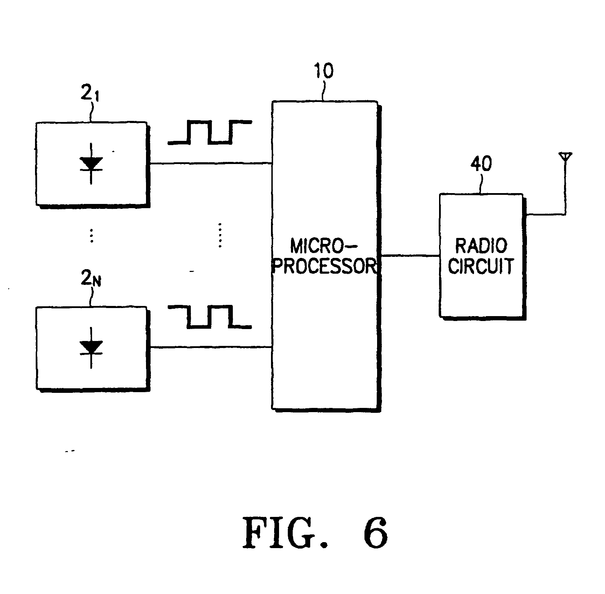

Reference is now made to Fig. 6 which shows a display control device for a radio communication system having a plurality of N displaying elements. A radio circuit 40 transmits/receives a radio signal under the control of the microprocessor 10, which controls the overall operation of the radio communication system and in particular, outputs the control voltages according to the invention.

The microprocessor 10 has N output ports to output the control voltages therethrough. N displaying elements 2₁-2_{N} are connected to the corresponding output ports and are turned on/off in response to the control voltages supplied from the microprocessor 10.

Further, the microprocessor 10 pairs the displaying elements 2₁-2_{N} and outputs the control voltages having the opposite phases, as shown in Figs. 4A and 4B, to each pair of the displaying elements. Therefore, the frequencies output from the respective pairs of the displaying elements 2₁-2_{N} will be, according to Figs. 5A and 5B, cancelled out. As a result, all noise frequencies caused by the displaying elements can be eliminated, thereby preventing a decrease of the communication quality of the radio communication system.

## Claims

1. A device for displaying an operating status of parts of a radio communication system, the device comprising:
a display including a plurality of displaying elements (LED1, LED2, 2₁, 2_{N}) including first and second displaying elements; and
a controller (10) for outputting a first control voltage (Vo1) to the first displaying elements and a second control voltage (Vo2) to the second displaying elements, said first and second control voltages having substantially opposite phases.

2. The device according to claim 1, wherein each of the first displaying elements is paired with a respective one of the second displaying elements.

3. The device according to claims 1 or 2, wherein the first and second control voltages have rectangular waveforms for turning on/off the respective displaying elements.

4. The device according to one of claims 1 to 3, wherein the displaying elements comprise light emitting diodes.

5. The device according to one of claims 1 to 4 wherein the displaying elements comprise seven-segment displays.

6. The device according to one of claims 1 to 5 wherein the operating status indicates normal operation.

7. The display according to one of claims 1 to 6 wherein the operating status indicates abnormal operation.

8. A method for displaying an operating status of parts of a radio communication system, said display having a plurality of displaying elements (LED1, LED2, 2₁,2_{N}) including first and second displaying elements, the method comprising the steps of:
outputting a first control voltage (Vo1) to the first displaying elements; and
outputting a second control voltage (Vo2) to the second displaying elements,
wherein said first and second control voltages have substantially opposite phases.

9. The method according to claim 8, further comprising the step of pairing each first displaying element with a respective second displaying element.

10. The method according to claims 8 or 9 wherein the first and second control voltages have rectangular waveforms for turning on/off the respective displaying elements.

11. The method according to one of claims 8 to 10 wherein the displaying elements comprise light emitting diodes.

12. The method according to one of claims 8 to 11 wherein the displaying elements comprise.seven-segment displays.

13. The method according to one of claims 8 to 12 wherein the operating status indicates normal operation.

14. The method according to one of claims 8 to 13 wherein the operating status indicates abnormal operation.

## Patentansprüche

1. Vorrichtung zum Anzeigen eines Betriebszustand von Teilen eines Funkkommunikationssystems, wobei die Vorrichtung umfasst:
eine Anzeige, die eine Vielzahl von Anzeigeelementen (LED1, LED2, 2₁, 2_{N}) einschließlich erster und zweiter Anzeigeelemente enthält; und
eine Steuerung (10), die eine erste Steuerspannung (Vo1) an die ersten Anzeigeelemente und eine zweite Steuerspannung (Vo2) an die zweiten Anzeigeelemente ausgibt, wobei die erste und die zweite Steuerspannung im Wesentlichen einander entgegengesetzte Phasen haben.

2. Vorrichtung nach Anspruch 1, wobei jedes der ersten Anzeigeelemente mit einem entsprechenden der zweiten Anzeigeelemente paarig zusammengefasst ist.

3. Vorrichtung nach den Ansprüchen 1 oder 2, wobei die erste und die zweite Steuerspannung rechteckige Wellenformen zum An-/Abschalten der jeweiligen Anzeigeelemente haben.

4. Vorrichtung nach einem der Ansprüche 1 bis 3, wobei die Anzeigeelemente Leuchtdioden umfassen.

5. Vorrichtung nach einem der Ansprüche 1 bis 4, wobei die Anzeigeelemente Siebensegmentanzeigen umfassen.

6. Vorrichtung nach einem der Ansprüche 1 bis 5, wobei der Betriebszustand einen normalen Betrieb anzeigt.

7. Anzeige nach einem der Ansprüche 1 bis 6, wobei der Betriebszustand einen abnormalen Betrieb anzeigt.

8. Verfahren zum Anzeigen eines Betriebszustand von Teilen eines Funkkommunikationssystems, wobei die Anzeige eine Vielzahl von Anzeigeelementen (LED1, LED2, 2₁, 2_{N}) einschließlich erster und zweiter Anzeigeelemente aufweist, und das Verfahren die folgenden Schritte umfasst:
Ausgeben einer ersten Steuerspannung (Vo1) an die ersten Anzeigeelemente; und
Ausgeben einer zweiten Steuerspannung (Vo2) an die zweiten Anzeigeelemente,
wobei die erste und die zweite Steuerspannung im Wesentlichen entgegengesetzte Phasen haben.

9. Verfahren nach Anspruch 8, das des Weiteren den Schritt des paarigen Zusammenfassens jedes ersten Anzeigeelementes mit einem entsprechenden zweiten Anzeigeelement umfasst.

10. Verfahren nach den Ansprüchen 8 oder 9, wobei die erste und die zweite Steuerspannung rechteckige Wellenformen zum An-/Abschalten der jeweiligen Anzeigeelemente haben.

11. Verfahren nach einem der Ansprüche 8 bis 10, wobei die Anzeigeelemente Leuchtdioden umfassen.

12. Verfahren nach einem der Ansprüche 8 bis 11, wobei die Anzeigeelemente Siebensegmentanzeigen umfassen.

13. Verfahren nach einem der Ansprüche 8 bis 12, wobei der Betriebszustand einen normalen Betrieb anzeigt.

14. Verfahren nach einem der Ansprüche 8 bis 13, wobei der Betriebszustand einen abnormalen Betrieb anzeigt.

## Revendications

1. Dispositif pour afficher un état de fonctionnement de pièces d'un système de radiocommunication, le dispositif comportant :
un afficheur comprenant une pluralité d'éléments d'affichage (LED1, LED2, 2₁, 2_{N}) comprenant des premier et second éléments d'affichage ;
un dispositif de commande (10) destiné à délivrer en sortie une première tension de commande (Vol) aux premiers éléments d'affichage et une seconde tension de commande (Vo2) aux seconds éléments d'affichage, lesdites première et seconde tensions de commande ayant des phases sensiblement opposées.

2. Dispositif selon la revendication 1, dans lequel chacun des premiers éléments d'affichage forme une paire avec l'un, respectif, des seconds éléments d'affichage.

3. Dispositif selon les revendications 1 ou 2, dans lequel les première et seconde tensions de commande ont des formes d'onde rectangulaires pour allumer/éteindre les éléments d'affichage respectifs.

4. Dispositif selon l'une des revendications 1 à 3, dans lequel les éléments d'affichage comprennent des diodes émettrices de lumière.

5. Dispositif selon l'une des revendications 1 à 4, dans lequel les éléments d'affichage comprennent des afficheurs à sept segments.

6. Dispositif selon l'une des revendications 1 à 5, dans lequel l'état de fonctionnement indique un fonctionnement normal.

7. Dispositif d'affichage selon l'une des revendications 1 à 6, dans lequel l'état de fonctionnement indique un fonctionnement anormal.

8. Procédé pour l'affichage d'un état de fonctionnement de pièces d'un système de radiocommunication, ledit affichage comprenant une pluralité d'éléments d'affichage (LED1, LED2, 2₁, 2_{N}) comprenant des premiers et seconds éléments d'affichage, le procédé comprenant les étapes qui consistent :
à délivrer en sortie une première tension de commande (Vol) aux premiers éléments d'affichage ; et
à délivrer en sortie une seconde tension de commande (Vo2) aux seconds éléments d'affichage,
dans lequel lesdites première et seconde tensions de commande ont des phases sensiblement opposées.

9. Procédé selon la revendication 8, comprenant en outre l'étape consistant à associer par paires chaque premier élément d'affichage avec un second élément d'affichage respectif.

10. Procédé selon les revendications 8 ou 9, dans lequel les première et seconde tensions de commande ont des formes d'onde rectangulaires pour allumer/éteindre les éléments d'affichage respectifs.

11. Procédé selon l'une des revendications 8 à 10, dans lequel les éléments d'affichage comprennent des diodes émettrices de lumière.

12. Procédé selon l'une des revendications 8 à 11, dans lequel les éléments d'affichage comprennent des afficheurs à sept segments.

13. Procédé selon l'une des revendications 8 à 12, dans lequel l'état de fonctionnement indique un fonctionnement normal.

14. Procédé selon l'une des revendications 8 à 13, dans lequel l'état de fonctionnement indique un fonctionnement anormal.
